# EUROPEAN PATENT SPECIFICATION

(11) **EP 3 985 051 B1**
(45) Date of publication and mention of the grant of the patent: **17.07.2024**
(21) Application number: 21202345.1
(22) Date of filing: 13.10.2021
(51) Int. Cl.: C08J 5/18, B32B 5/30, C08L 31/04, C08L 75/04

(54) **SHEET STRUCTURE**
BLATTSTRUKTUR
STRUCTURE DE FEUILLE

(30) Priority: 15.10.2020 TW 109135687
(43) Date of publication of application: 20.04.2022
(73) Proprietor: Chaei Hsin Enterprise Co., Ltd., 407 Taichung City (TW)
(72) Inventor: WANG, Shui-Mu, 407 Taichung City (TW)
(74) Representative: Straus, Alexander

(56) References cited:
- WO-A1-2020/168176
- US-A1- 2004 126 571
- US-A1- 2016 361 901
- DATABASE WPI Week 201312, 2013 Derwent World Patents Index; AN 2013-B73613, XP002805696

## Description

### Field of the Invention

The present disclosure relates to a sheet structure made of plastic materials, and more particularly, to a sheet structure made of recycled plastic materials.

### Background of the Invention

With progress of modern industry, new applications of various products and materials are constantly introduced. It improves people's living standards on one hand, but deteriorates the environment that people live on the other hand. Plastic products have been mass-produced due to their merits of light weight and low cost. For example, in US 2016/0361901 A1, it discloses a laminated surface covering including a facing material made of vinyl and a backing material comprising a rubber component. The rubber component comprises at least a matrix of bonded rubber granules. A bonding material is disposed between the facing material and backing material. The facing material is configured to melt at a temperature between 165°F and 248°F. Infiltrating the backing material essentially encases the rubber granules of the matrix and provides fire retardation and smoke suppression qualities. However, mass production of the plastic products leads to that an enormous number of the plastic waste results in serious pollution to the environment.

Therefore, the circular economy that allows plastic materials to be continuously reused has become a key development project in many countries all over the world. Through the recycling of plastic products, reproduction of the recycled plastic products to create different commodity values and to rebloom a new commercial market driving the sustainable use of materials has become an important issue for the industry.

### Summary of the Invention

This in mind, the present disclosure aims at providing a sheet structure.

This is achieved by a sheet structure according to claim 1. The dependent claims pertain to corresponding further developments and improvements.

As will be seen more clearly from the detailed description following below, the claimed sheet structure includes a plurality of first recycled granule portions and a plurality of second recycled granule portions. Each of the first recycled granule portions includes a first surface layer. Each of the second recycled granule portions includes a second surface layer. The first surface layer of one of the first recycled granule portions is fusingly connected to the first surface layer of another one of the first recycled granule portions and/or the second surface layer of one of the second recycled granule portions. The second surface layer of one of the second recycled granule portions is fusingly connected to the second surface layer of another one of the second recycled granule portions and/or the first surface layer of one of the first recycled granule portions. A material of the plurality of first recycled granule portions is a first recyclable thermoplastic material. A material of the plurality of second recycled granule portions is a second recyclable thermoplastic material. The first surface layer of each of the first recycled granule portions is formed by the first recyclable thermoplastic material through a combination of process parameters, and the second surface layer of each of the second recycled granule portions is formed by the second recyclable thermoplastic material through said process parameters. The process parameters are a highest temperature within a process apparatus, a maximum air pressure difference between interior and exterior of the process apparatus, an operating duration of the process apparatus. The claimed sheet structure further includes an upper surface, a lower surface opposite to the upper surface and a panel portion disposed on at least one of the upper surface and the lower surface. The panel portion has a pattern layer disposed on a side of the panel portion. At least one of the material of the plurality of first recycled granule portions and the material of the plurality of second recycled granule portions is a transparent material. The panel portion is exposed to a viewer through the plurality of first recycled granule portions and/or the plurality of second recycled granule portions.

According to one embodiment, the first recyclable thermoplastic material has a first melting temperature, a first Vicat softening temperature and a first glass transition temperature, and the second recyclable thermoplastic material has a second melting temperature, a second Vicat softening temperature and a second glass transition temperature.

According to one embodiment, a plurality of first recycled granules are formed by the first recyclable thermoplastic material, the plurality of first recycled granule portions are formed by the first recycled granules through the process parameters, a plurality of second recycled granules are formed by the second recyclable thermoplastic material, and the plurality of second recycled granule portions are formed by the second recycled granules through the process parameters.

According to one embodiment, the first recyclable thermoplastic material is a thermoplastic polyurethane, and the second recyclable thermoplastic material is an ethylene vinyl acetate.

According to one embodiment, the second recyclable thermoplastic material is a hot melt glue.

According to one embodiment, the sheet structure further includes a plurality of third recycled granule portions. Each of the third recycled granule portions includes a third surface layer. The third surface layer of one of the third recycled granule portions is fusingly connected to at least one of the third surface layer of another one of the third recycled granule portions, the first surface layer of one of the first recycled granule portions and the second surface layer of one of the second recycled granule portions.

According to one embodiment, a material of the panel portion is different from the material of the plurality of first recycled granule portions, and the material of the panel portion is different from the material of the plurality of second recycled granule portions.

According to one embodiment, a size of each of the first recycled granule portions is substantially identical to a size of each of the second recycled granule portions.

According to one embodiment, the plurality of first recycled granule portions have a first color, and the plurality of second recycled granule portions have a second color.

### Brief Description of the Drawings

In the following, the present disclosure is further illustrated by way of example, taking reference to the accompanying drawings thereof:
FIG. 1 is a schematic top view of part of a sheet structure according to a first embodiment of the present disclosure;
FIG. 2 is a flow chart of a method for forming the sheet structure according to the first embodiment of the present disclosure;
FIG. 3 is a schematic diagram exemplifying a recycling procedure and a reproducing procedure shown in FIG. 2;
FIG. 4 is a schematic diagram exemplifying a sieving procedure shown in FIG. 2;
FIG. 5, FIG. 6 and FIG. 7 are schematic sectional diagrams exemplifying a manufacturing procedure according to a process parameter shown in FIG. 2;
FIG. 8 is a schematic partial sectional diagram of the sheet structure during the manufacturing procedure according to the process parameter shown in FIG. 7;
FIG. 9 is a schematic partial sectional diagram of the sheet structure when the manufacturing procedure according to the process parameter shown in FIG. 8 is completed;
FIG. 10 is a schematic partial sectional diagram of a sheet structure according to another embodiment of the present disclosure;
FIG. 11 is a schematic top view of part of the sheet structure according to another embodiment of the present disclosure;
FIG. 12 is a schematic top view of part of a sheet structure according to a yet another embodiment of the present disclosure;
FIG. 13 is a schematic partial sectional diagram of a sheet structure according to a second embodiment of the present disclosure; and
FIG. 14 is a schematic partial sectional diagram of a sheet structure according to a third embodiment of the present disclosure.

### Detailed Description

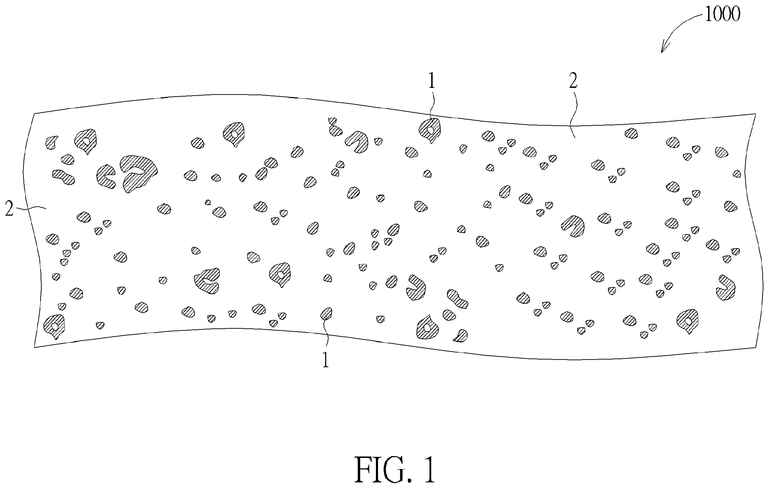

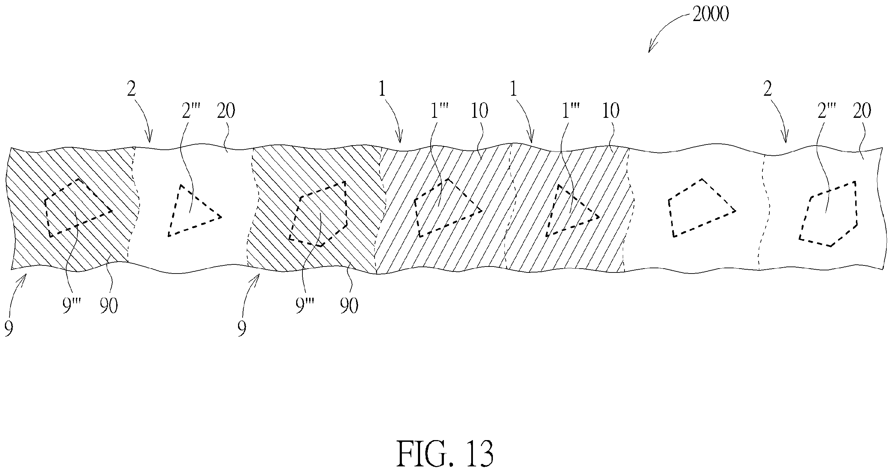

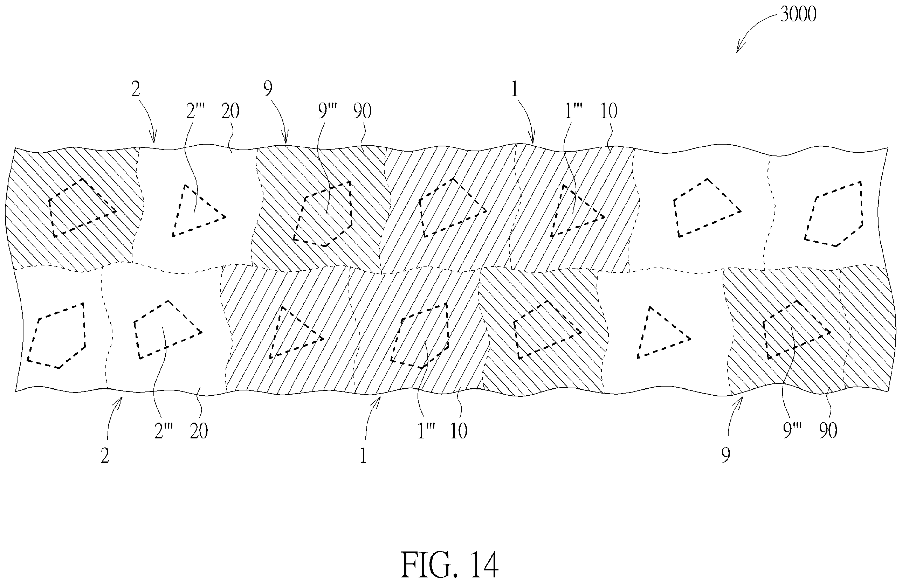

A first embodiment corresponding to FIGS. 1 to FIG. 9, a second embodiment corresponding to FIG. 13, and a third embodiment corresponding to FIG. 14 are not encompassed by the wording of the claims but are considered as useful for understanding the invention.

In order to enable the skilled persons in the art to better understand the present disclosure, hereinafter preferred embodiments with drawings are provided for illustrating the present disclosure and the effect to be achieved. It should be noted that the drawings are simplified schematic diagrams. Therefore, only elements related to the present disclosure and combination relationship thereof are shown to provide a clearer description of the basic framework or implementation methods of the present disclosure. The actual elements and configuration may be more complicated. In addition, for the sake of convenience, the number of the components in the drawings could be unequal the actual number thereof, the shape and size of the components may not draw in proportion to the actual shape and size, and the proportion thereof can be adjusted according to design requirements.

The directional terminology in the following embodiments, such as top, bottom, left, right, front or back, is used with reference to the orientation of the Figure(s) being described. As such, the directional terminology is used for purposes of illustration and is in no way limiting.

The ordinal number terminology, such as first, second and third, can be used to describe various elements, and the elements are not limited by definition of the ordinal number terminology. The ordinal number terminology is used to distinguish one element from other element(s) in the specification, and the ordinal number terminology of the element in the claims is arranged according to the claimed order and could be different from that in the specification. For example, a first element recited in the following description could be a second element in the claims.

The term "melting temperature (Tm)" mentioned in the following embodiment(s) refers to the temperature that a plastic material melt into a liquid state, including the situations that the temperature of the plastic material is at the melting temperature or the temperature of the plastic material is above the melting temperature.

The term "Vicat softening temperature (VST)" mentioned in the following embodiment(s) refers to the temperature that a standard indenter with a cross-sectional area of 1 mm² penetrates a specimen of a plastic material to the depth of 1 mm under a certain load condition, while the temperature is raised at a constant rate.

The term "glass transition temperature (Tg)" mentioned in the following embodiment(s) refers to the temperature at which a solid substance reversibly transits between a glass state and an elastic state. When a specific temperature range is reached, the small molecular chains of a plastic material begin to move. This specific temperature range is called the glass transition temperature. If the temperature is lower than the glass transition temperature, the plastic material is in a rigid glass state, due to the molecular chains of the plastic material unable to move.

The term "fusingly connected" mentioned in the following embodiment(s) refers that a plastic material in a softened state, due to being at a temperature which is above the Vicat softening temperature of the plastic material, is connected to another plastic material in a softened state, due to being at the temperature which is above the Vicat softening temperature of the another plastic material; or that a plastic material in a softened state, due to being at a temperature which is above the Vicat softening temperature of the plastic material, is connected to another plastic material in a liquid state, due to being at the temperature which is above the melting temperature of the another plastic material; or that a plastic material in a liquid state, due to being at a temperature which is above the melting temperature of the plastic material, is connected to another plastic material in a liquid state, due to being at the temperature which is above the melting temperature of the another plastic material.

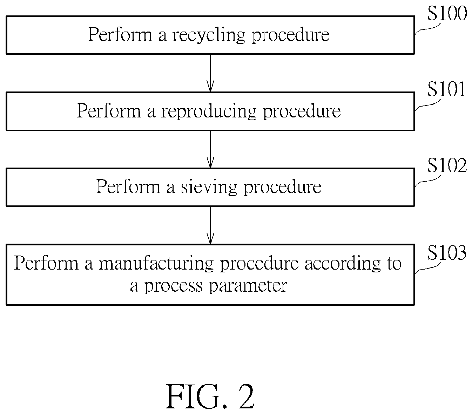

Please refer to FIG. 1. FIG. 1 is a schematic top view of part of a sheet structure 1000 according to the first embodiment of the present disclosure. As shown in FIG. 1, the sheet structure 1000 includes a plurality of first recycled granule portions 1 and a plurality of second recycled granule portions 2. Please refer to FIG. 2. FIG. 2 is a flow chart of a method for forming the sheet structure 1000 according to the first embodiment of the present disclosure, in which the method includes the following steps.

| | |
|---|---|
| S100: | Perform a recycling procedure. |
| S101: | Perform a reproducing procedure. |
| S102: | Perform a sieving procedure. |
| S103: | Perform a manufacturing procedure according to a process parameter. |

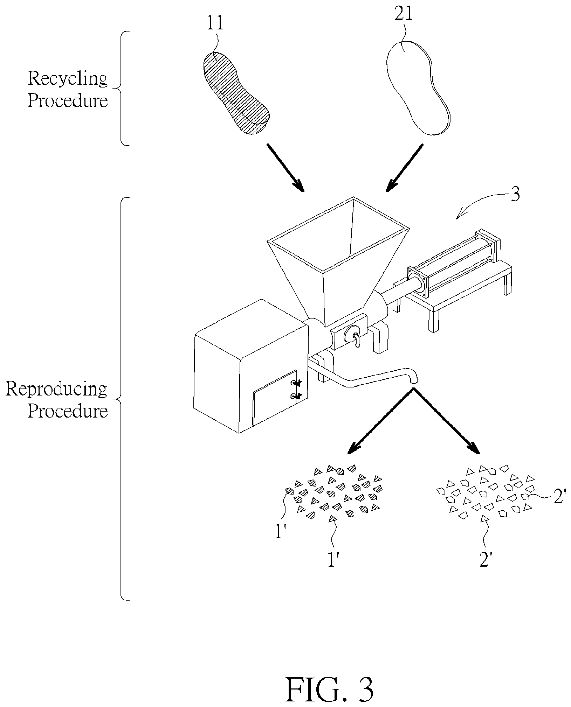

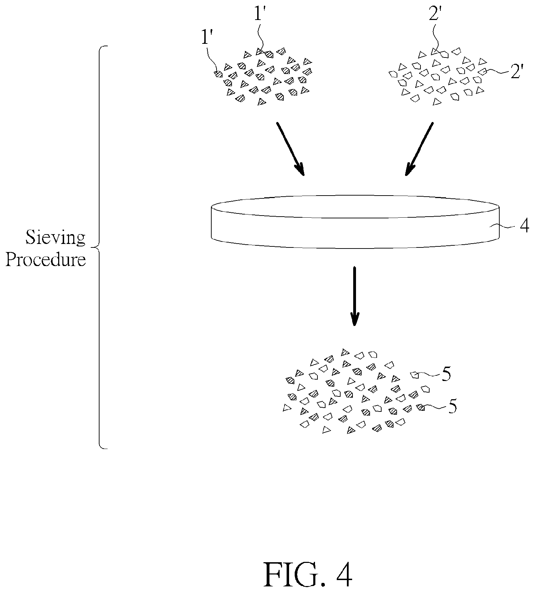

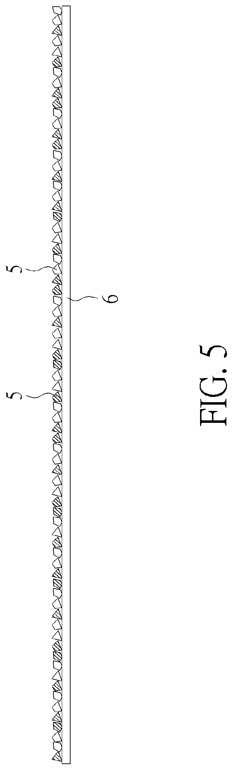

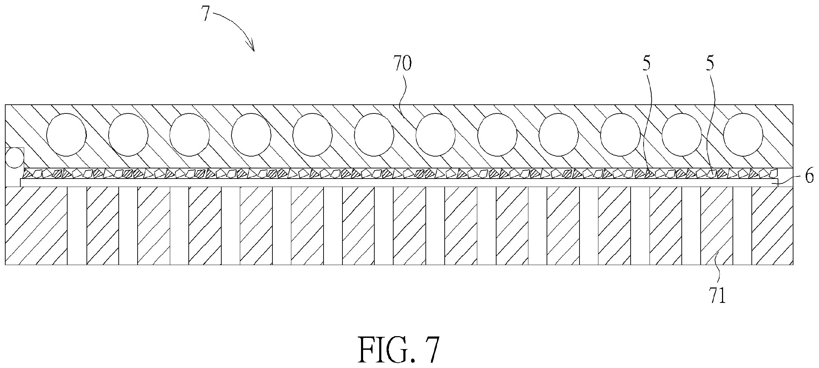

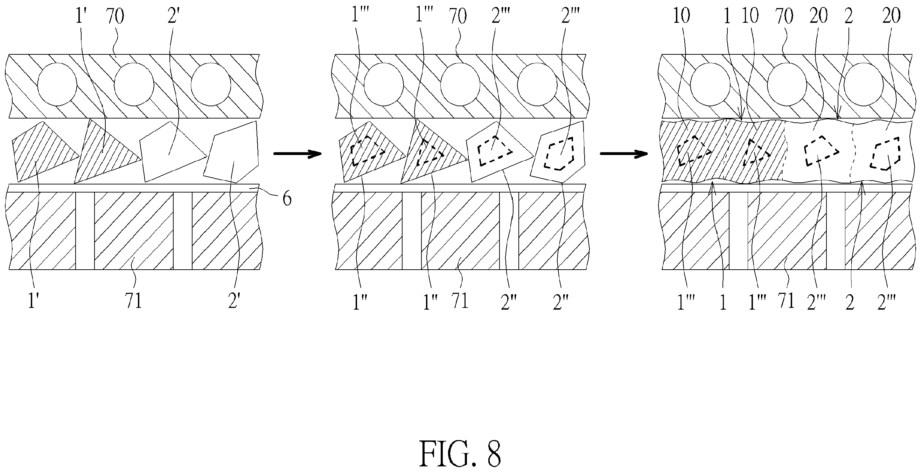

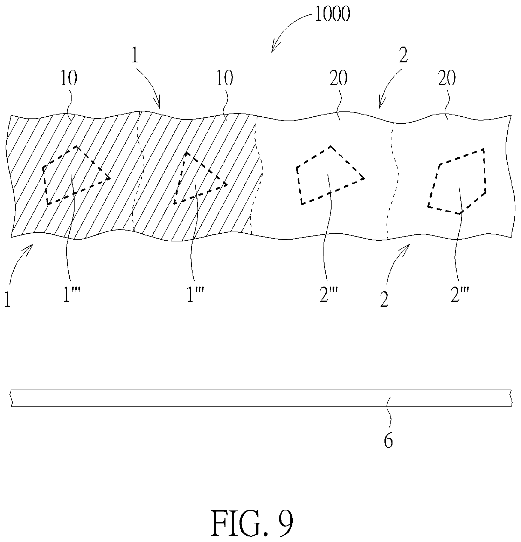

The detailed description of the method for forming the sheet structure 1000 according to the first embodiment of the present disclosure is provided as follows. Please refer to FIG. 3 to FIG. 9 as well. FIG. 3 is a schematic diagram exemplifying the recycling procedure and the reproducing procedure shown in FIG. 2. FIG. 4 is a schematic diagram exemplifying the sieving procedure shown in FIG. 2. FIG. 5, FIG. 6 and FIG. 7 are schematic sectional diagrams exemplifying the manufacturing procedure according to the process parameter shown in FIG. 2. FIG. 8 is a schematic partial sectional diagram of the sheet structure 1000 during the manufacturing procedure according to the process parameter shown in FIG. 7. FIG. 9 is a schematic partial sectional diagram of the sheet structure 1000 when the manufacturing procedure according to the process parameter shown in FIG. 8 is completed.

### Step S100 - Recycling Procedure

As shown in FIG. 3, in the recycling procedure, waste plastic products, such as a first recycled member 11 and a second recycled member 21, are recycled for reproduction later on. In this embodiment, the first recycled member 11 and the second recycled member 21 can be two different soles of shoes, but the present disclosure is not limited thereto. For example, the first recycled member 11 and the second recycled member 21 can be two different plastic containers, two different plastic casings and so on. A material of the first recycled member 11 is a first recyclable thermoplastic material, and a material of the second recycled member 21 is a second recyclable thermoplastic material, wherein the first recyclable thermoplastic material and the second recyclable thermoplastic material can be thermoplastic materials, such as PE, PP, PS, PMMA, PVC, Nylon, PC, PTFE, PET, POM, PU, TPU, EVA and so on. The first recyclable thermoplastic material and the second recyclable thermoplastic material can be the same or different materials, depending on practical demands.

### Step S101 - Reproducing Procedure

As shown in FIG. 3, after the first recycled member 11 and the second recycled member 21 are recycled, the first recycled member 11 and the second recycled member 21 can be reproduced by a shredder 3, thereby generating a plurality of first recycled granules 1' and a plurality of second recycled granules 2'. Accordingly, a material of the first recycled granules 1' is the first recyclable thermoplastic material, and a material of the second recycled granules 2' is the second recyclable thermoplastic material. The first recycled granules 1' and the second recycled granules 2' may have different colors, i.e., the first recycled granules 1' have a first color, and the second recycled granules 2' have a second color which is different from the first color. It is noted that the colors of the first recycled granules 1' and the second recycled granules 2' may originate from the first recycled member 11 and the second recycled member 21. Or alternatively, the color(s) of the first recycled granules 1' and/or the second recycled granules 2' can be imposed through dyeing or coloring, depending on practical demands.

### Step S102 - Sieving Procedure

As shown in FIG. 4, when the first recycled granules 1' and the second recycled granules 2' are generated, the first recycled granules 1' and the second recycled granules 2' are sieved by a sieve 4, and the sieved first recycled granules 1' are mixed with the sieved second recycled granules 2' based on a proportion, so as to generate a plurality of mixed recycled granules 5, wherein the mixed recycled granules 5 includes the first recycled granules 1' and the second recycled granules 2'. For example, the first recycled granules 1' and the second recycled granules 2' are mixed with a weight ratio of 3:7, but the weight ratio of the first recycled granules 1' and the second recycled granules 2' is not limited thereto, depending on practical demands. It is noted that, after the first recycled granules 1' and the second recycled granules 2' pass meshes of the sieve 4, a size of the first recycled granules 1' is alike to a size of the second recycled granules 2' due to each of the meshes of the sieve 4 is substantially equal in size. In this embodiment, the mixed recycled granules 5 formed after passing the sieve 4 have each granule of the first recycled granules 1' and the second recycled granules 2' with maximum sizes of 1.2 mm, but the present disclosure is not limited thereto. In another embodiment, maximum sizes of each granule of the first recycled granules 1' and the second recycled granules 2' can be adjusted by selecting the sieve 4 with desired mesh size.

### Step S103 - Manufacturing Procedure according to Process Parameter

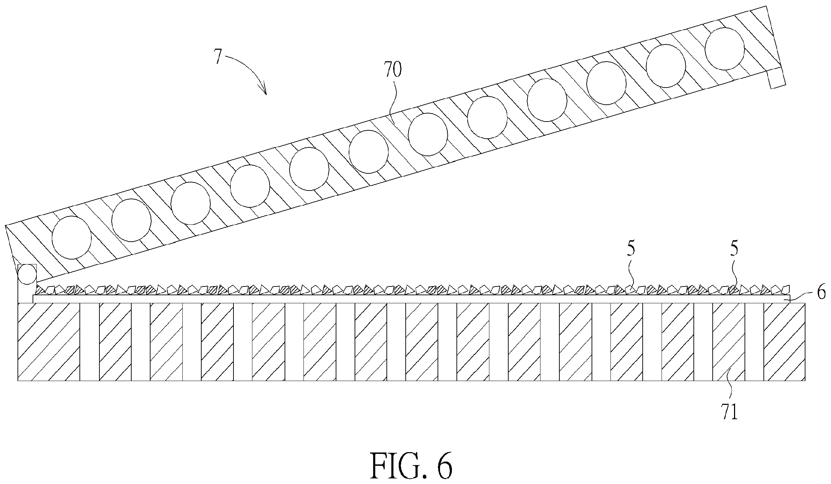

As shown in FIG. 5, in this embodiment, after the plurality of mixed recycled granules 5 are generated, the mixed recycled granules 5 are disposed on an adhesive holding member 6. As shown in FIG. 6, in this embodiment, the adhesive holding member 6 disposed with the mixed recycled granules 5 are placed in a process apparatus 7, wherein the process apparatus 7 includes a heat pressing module 70 and a vacuum module 71. The heat pressing module 70 is pivoted to the vacuum module 71, such that the heat pressing module 70 can be rotated relative to the vacuum module 71 to an open position as shown in FIG. 6 or to a closed position as shown in FIG. 7. When the heat pressing module 70 is located in the closed position relative to the vacuum module 71, as shown in FIG. 7, a chamber is formed between the heat pressing module 70 and the vacuum module 71 of the process apparatus 7 for containing the adhesive holding member 6 disposed with the mixed recycled granules 5. The heat pressing module 70 is a heat source for heating the mixed recycled granules 5 in the process apparatus 7 to meet a requirement of a process parameter. The vacuum module 71 is for vacuumizing the chamber to fix the adhesive holding member 6 and to adjust the air pressure of the chamber to meet the requirement of the process parameter, thereby compressing the mixed recycled granules 5. The process parameter refers to a highest temperature within the process apparatus 7, a maximum air pressure difference between interior and exterior of the process apparatus 7, and an operating duration of the process apparatus 7.

The process apparatus 7 being in a situation of environmental temperature 25°C and atmospheric pressure 1 atm is illustrated as an example. The highest temperature within the process apparatus 7, the maximum air pressure difference between interior and exterior of the process apparatus 7 and the operating duration of the process apparatus 7 are exemplified in the Table I.

**Table I**

| | Highest Temperature | Maximum Air Pressure Difference | Operating Duration |
|---|---|---|---|
| Maximum | 140°C | 1.5 bar | 110 seconds |
| Minimum | 60°C | 0.5 bar | 65 seconds |

Furthermore, the first recyclable thermoplastic material has a first melting temperature, a first Vicat softening temperature and a first glass transition temperature, and the second recyclable thermoplastic material has a second melting temperature, a second Vicat softening temperature and a second glass transition temperature. The first recyclable thermoplastic material and the second recyclable thermoplastic material being Thermoplastic Polyurethanes (TPU) and the process apparatus 7 being in a situation of environmental temperature 25°C and atmospheric pressure 1 atm is illustrated as an example. The first melting temperature, the first Vicat softening temperature, the first glass transition temperature, the second melting temperature, the second Vicat softening temperature and the second glass transition temperature is exemplified in the Table II.

**Table II**

| | |
|---|---|
| First melting temperature | 68°C ~ 195°C |
| First Vicat softening temperature | 63°C ~ 148°C |
| First glass transition temperature | -45°C ~ -15°C |
| Second melting temperature | 65°C ~ 190°C |
| Second Vicat softening temperature | 59°C ~ 142°C |
| Second glass transition temperature | -46°C ~ -14°C |

Please refer to FIG. 8 and FIG. 9. As shown in FIG. 8, when the first recycled granules 1' made of the first recyclable thermoplastic material having properties exemplified in Table II, such as a TPU, and the second recycled granules 2' made of the second recyclable thermoplastic material having properties exemplified in Table II, such as another TPU, are applied by the process parameter exemplified in Table I in the chamber of the process apparatus 7, surfaces of the first recycled granules 1' start to melt/soften, thereby forming the melted/softened first recycled granules 1", and surfaces of the second recycled granules 2' start to melt/soften, thereby forming the melted/softened second recycled granules 2", as shown on the left of FIG. 8. Each of the melted/softened first recycled granules 1" starts to have an unmelted/non-softened first core portion 1‴ and a first surface layer 10 covering the unmelted/non-softened first core portion 1‴. Each of the melted/softened second recycled granules 2" starts to have an unmelted/non-softened second core portion 2‴ and a second surface layer 20 covering the unmelted/non-softened second core portion 2‴. In the meanwhile, the first surface layers 10 of the adjacent melted/softened first recycled granules 1" would be fusingly connected to one another, the second surface layers 20 of the adjacent melted/softened second recycled granules 2" would be fusingly connected to one another, and the first surface layer 10 of the melted/softened first recycled granules 1" would be fusingly connected to the second surface layer 20 of the adjacent melted/softened second recycled granules 2", as shown on the right of FIG. 8.

In such a manner, in this embodiment as shown in FIG. 9, when the process parameter is unloaded and the sheet structure 1000 is taken out of the adhesive holding member 6 and the process apparatus 7, each of the first recycled granule portions 1 of the sheet structure 1000 includes the first surface layer 10 and the unmelted/non-softened first core portion 1‴, and each of the second recycled granule portions 2 of the sheet structure 1000 includes the second surface layer 20 and the unmelted/non-softened second core portion 2‴. It is noted that proportions of a surface layer and a core portion of each of granule portions can be varied by adjusting the process parameter. For example, increasing the maximum temperature within the process apparatus 7 to approach or exceed the melting temperature of the recyclable thermoplastic materials would increase the proportion of the surface layers, decrease the proportion of the core portions, and shorten the operating duration of the process apparatus 7.

As described in the aforesaid steps S100, S101, S102 and S103, the first surface layer 10 is formed by the first recyclable thermoplastic material through the process parameter, and the second surface layer 20 is formed by the second recyclable thermoplastic material through the process parameter. Accordingly, a size of each of the first recycled granule portions 1 is substantially identical to a size of each of the second recycled granule portions 2. In this embodiment, the first recycled granule portions 1 have the first color, and the second recycled granule portions 2 have the second color different from the first color. In general, the first surface layer 10 of one of the first recycled granule portions 1 of the sheet structure 1000 is fusingly connected to the first surface layer 10 of another one of the first recycled granule portions 1 and/or the second surface layer 20 of one of the second recycled granule portions 2 of the sheet structure 1000, and the second surface layer 20 of one of the second recycled granule portions 2 of the sheet structure 1000 is fusingly connected to the second surface layer 20 of another one of the second recycled granule portions 2 and/or the first surface layer 10 of one of the first recycled granule portions 1 of the sheet structure 1000.

It is noted that, in steps S100, S101, S102 and S103 of other varied embodiment, the second recyclable thermoplastic material may be a material with a second melting temperature much lower than a first melting temperature of the first recyclable thermoplastic material. For example, the first recyclable thermoplastic material may still be the TPU, while the second recyclable thermoplastic material is an Ethylene Vinyl Acetate (EVA). As such, when step S103 is performed, all of the second recycled granules are completely melted and become a second recycled body portion which covers at least one portion of the first surface layer of each of the first recycled granule portions. On the other hand, in steps S102 and S103 of yet other varied embodiment, the second recycled granules may be replaced by granules of hot melt glue. That is, the second recyclable thermoplastic material may be a hot melt glue. As such, when step S103 is performed, all of the granules of hot melt glue are completely melted and become an adhesive body portion which covers at least one portion of the first surface layer of each of the first recycled granule portions.

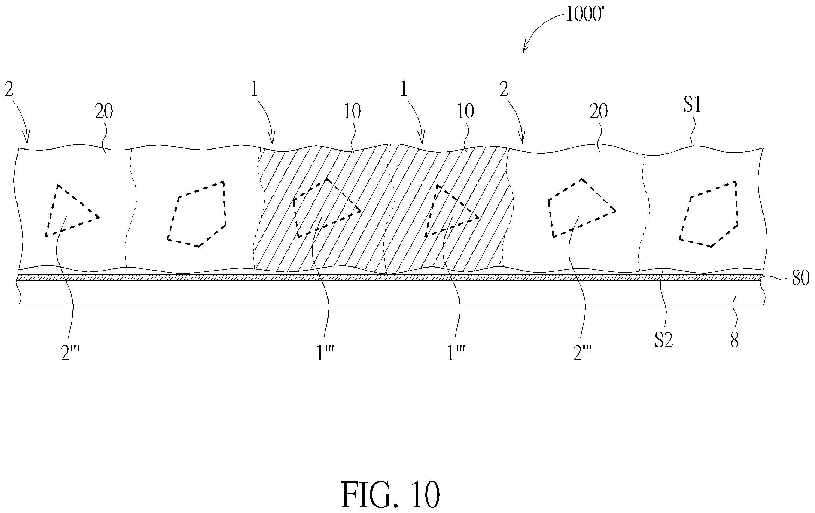

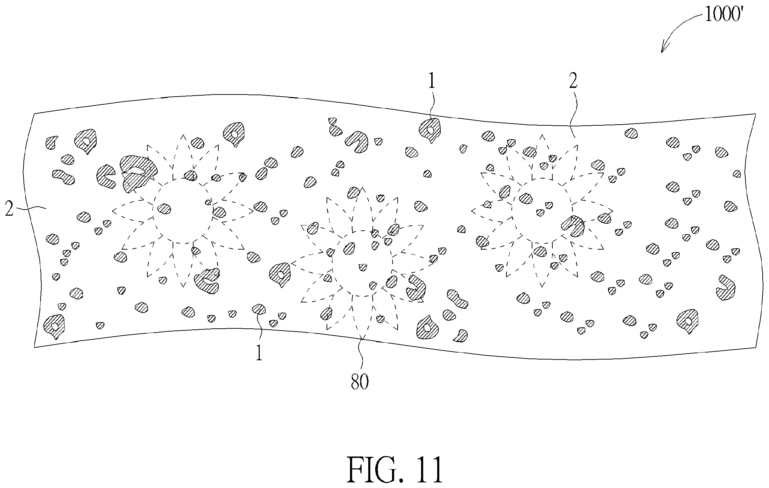

Please refer to FIG. 10 and FIG. 11. FIG. 10 is a schematic partial sectional diagram of a sheet structure 1000' according to the invention. FIG. 11 is a schematic top view of part of the sheet structure 1000' according to another embodiment of the present invention.

A major difference between the sheet structure 1000' and the aforesaid sheet structure 1000 is that the sheet structure 1000' further includes a panel portion 8. In this embodiment, the panel portion 8 has a pattern layer 80. The sheet structure 1000' further includes an upper surface S1 and a lower surface S2 opposite to the upper surface S1, wherein the upper surface S1 and the lower surface S2 can be determined by the distance relative to a viewer. The upper surface S1 is closer to the viewer than the lower surface S2. The panel portion 8 is disposed on at least one of the upper surface S1 and the lower surface S2. In this embodiment, the panel portion 8 is disposed on the lower surface S2 and the pattern layer 80 is disposed on a side of the panel portion 8 and faces the lower surface S2. In other varied embodiment, the pattern layer 80 can be disposed on a side of the panel portion 8 and opposite to the lower surface S2.

In addition, at least one of the first recycled granule portions 1 and the second recycled granule portions 2 of the sheet structure 1000' can be made of transparent material, translucent material or opaque material. At least one of the material of the plurality of first recycled granule portions (1) and the material of the plurality of second granule portions (2) is transparent material.

In this embodiment, materials of the second recycled granule portions 2 can be transparent thermoplastic polyurethanes, and materials of the first recycled granule portions 1 can be colored opaque thermoplastic polyurethanes. Accordingly, the patterns, the graphics, the colors, etc., of the pattern layer 80 of the panel portion 8 disposed on the lower surface S2 of the sheet structure 1000' can be exposed to the viewer through the second recycled granule portions 2, so that the special visual design on the pattern layer 80 can be seen by the viewer.

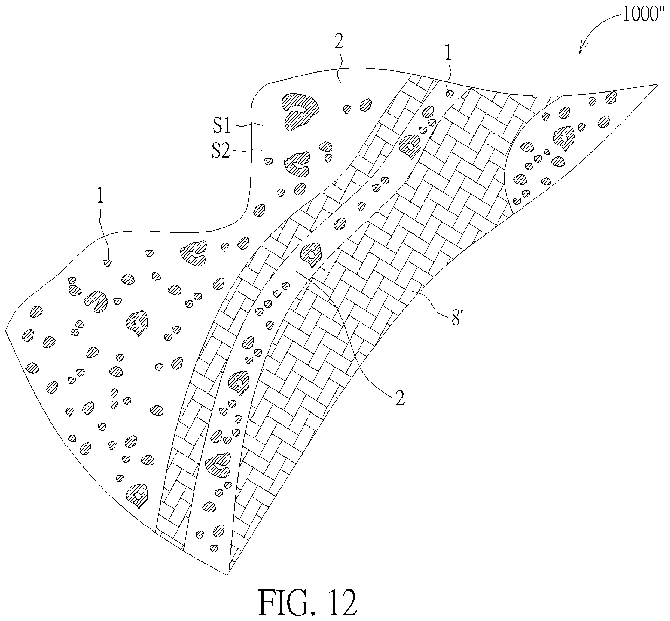

Please refer to FIG. 12. FIG. 12 is a schematic top view of part of a sheet structure 1000" according to a yet another embodiment of the present disclosure. The major difference between the sheet structure 1000" and the aforesaid sheet structure 1000 is that the sheet structure 1000" further includes a panel portion 8'. The sheet structure 1000" further includes an upper surface S1 and a lower surface S2 opposite to the upper surface S1, wherein the panel portion 8' is disposed on at least one of the upper surface S1 and the lower surface S2. In this embodiment, a material of the panel portion 8' is different from a material of the plurality of first recycled granule portions 1, and the material of the panel portion 8' is also different from a material of the plurality of second recycled granule portions 2. For example, the material of the panel portion 8' can be net, woven fabric, non-woven fabric, heat-resistant cloth, animal leather, artificial leather and so on. In this embodiment, the panel portion 8' is attached to the lower surface S2 of the sheet structure 1000".

Please refer to FIG. 13. FIG. 13 is a schematic partial sectional diagram of a sheet structure 2000 according to the second embodiment of the present disclosure. A major difference between the sheet structure 2000 and the aforesaid sheet structure 1000 is that the sheet structure 2000 further includes a plurality of third recycled granule portions 9. Each of the third recycled granule portions 9 includes a third surface layer 90. The third surface layer 90 of one of the third recycled granule portions 9 is fusingly connected to at least one of the third surface layer 90 of another one of the third recycled granule portions 9, the first surface layer 10 of one of the first recycled granule portions 1 and the second surface layer 20 of one of the second recycled granule portions 2, as shown in FIG. 13. In this embodiment, the third recycled granule portions 9 can originate from a third recycled member, wherein a material of the third recycled member is a third recyclable thermoplastic material. Similarly, the third surface layer 90 is formed by the third recyclable thermoplastic material through another process parameter. In this embodiment, each of the third recycled granule portions 9 has a third color which is different from the first color and the second color.

Please refer to FIG. 14. FIG. 14 is a schematic partial sectional diagram of a sheet structure 3000 according to the third embodiment of the present disclosure. A major difference between the sheet structure 3000 and the aforesaid sheet structure 2000 is that the sheet structure 3000 includes two sheet structures which are similar to the sheet structure 2000, and one of these two sheet structures is stacked up with the other one of these two sheet structures. Similarly, the third surface layer 90 of one of the third recycled granule portions 9 is fusingly connected to at least one of the third surface layer 90 of another one of the third recycled granule portions 9, the first surface layer 10 of one of the first recycled granule portions 1 and the second surface layer 20 of one of the second recycled granule portions 2. As a result, a thickness of the sheet structure 3000 is substantially twice a thickness of the sheet structure 2000 for satisfying different demands. It is noted that the sheet structure 3000 may be manufactured through steps S100, S101, S102 and S103, as shown in FIG. 2, with twice amount of the first recycled granules, twice amount of the second recycled granules and twice amount of the third recycled granules. Or, alternatively, the sheet structure 3000 may be manufactured through fusingly connecting two sheet structures which are similar to the sheet structure 2000.

Compared to prior art, the sheet structure of the present disclosure includes at least one kind of recycled granule portions. As illustrated in the first embodiment, the sheet structure includes the first recycled granule portions and the second recycled granule portions. As illustrated in the second embodiment, the sheet structure includes the first recycle granule portions, the second recycled granule portions and the third recycled granule portions. As a result, the recycled granule portions obtained from recycled plastic products could keep the continuous reuse of plastic materials, thereby creating different commodity values and reblooming a new commercial market to drive the sustainable use of materials.

## Claims

1. A sheet structure (1000, 1000', 1000", 2000, 3000), comprising:
a plurality of first recycled granule portions (1), each of the first recycled granule portions (1) comprising a first surface layer (10); and
a plurality of second recycled granule portions (2), each of the second recycled granule portions (2) comprising a second surface layer (20), the first surface layer (10) of one of the first recycled granule portions (1) being fusingly connected to the first surface layer (10) of another one of the first recycled granule portions (1) and/or the second surface layer (20) of one of the second recycled granule portions (2), the second surface layer (20) of one of the second recycled granule portions (2) being fusingly connected to the second surface layer (20) of another one of the second recycled granule portions (2) and/or the first surface layer (10) of one of the first recycled granule portions (1);
wherein a material of the plurality of first recycled granule portions (1) is a first recyclable thermoplastic material, a material of the plurality of second recycled granule portions (2) is a second recyclable thermoplastic material, the first surface layer (10) of each of the first recycled granule portions (1) is formed by the first recyclable thermoplastic material through a combination of process parameters, and the second surface layer (20) of each of the second recycled granule portions (2) is formed by the second recyclable thermoplastic material through said process parameters;
wherein the process parameters are a highest temperature within a process apparatus (7), a maximum air pressure difference between interior and exterior of the process apparatus (7), and an operating duration of the process apparatus (7);
further comprising an upper surface (S1), a lower surface (S2) opposite to the upper surface (S1) and a panel portion (8, 8') being disposed on at least one of the upper surface (S1) and the lower surface (S2), the panel portion (8, 8') having a pattern layer (80) being disposed on a side of the panel portion (8, 8');
wherein at least one of the material of the plurality of first recycled granule portions (1) and the material of the plurality of second recycled granule portions (2) is a transparent material; and
wherein the panel portion (8, 8') is exposed to a viewer through the plurality of first recycled granule portions (1) and/or the plurality of second recycled granule portions (2).

2. The sheet structure (1000, 1000', 1000", 2000, 3000) of claim 1, wherein the first recyclable thermoplastic material has a first melting temperature, a first Vicat softening temperature and a first glass transition temperature, and the second recyclable thermoplastic material has a second melting temperature, a second Vicat softening temperature and a second glass transition temperature.

3. The sheet structure (1000, 1000', 1000", 2000, 3000) of claim 1, wherein a plurality of first recycled granules (1') are formed by the first recyclable thermoplastic material, the plurality of first recycled granule portions (1) are formed by the first recycled granules (1') through the process parameters, a plurality of second recycled granules (2') are formed by the second recyclable thermoplastic material, and the plurality of second recycled granule portions (2) are formed by the second recycled granules (2') through the process parameters.

4. The sheet structure (1000, 1000', 1000", 2000, 3000) of claim 1, wherein the first recyclable thermoplastic material is a thermoplastic polyurethane, and the second recyclable thermoplastic material is an ethylene vinyl acetate.

5. The sheet structure (1000, 1000', 1000", 2000, 3000) of claim 1, wherein the second recyclable thermoplastic material is a hot melt glue.

6. The sheet structure (2000, 3000) of any of claims 1-5, further comprising:
a plurality of third recycled granule portions (9), each of the third recycled granule portions (9) comprising a third surface layer (90), the third surface layer (90) of one of the third recycled granule portions (9) being fusingly connected to at least one of the third surface layer (90) of another one of the third recycled granule portions (9), the first surface layer (10) of one of the first recycled granule portions (1) and the second surface layer (20) of one of the second recycled granule portions (2).

7. The sheet structure (1000") of claim 1, wherein a material of the panel portion (8') is different from the material of the plurality of first recycled granule portions (1), and the material of the panel portion (8') is different from the material of the plurality of second recycled granule portions (2).

8. The sheet structure (1000, 1000', 1000", 2000, 3000) of any of claims 1-7, wherein a size of each of the first recycled granule portions (1) is substantially identical to a size of each of the second recycled granule portions (2).

9. The sheet structure (1000, 1000', 1000", 2000, 3000) of any of claims 1-8, wherein the plurality of first recycled granule portions (1) have a first color, and the plurality of second recycled granule portions (2) have a second color.

## Patentansprüche

1. Lagenaufbau (1000, 1000', 1000", 2000, 3000), welcher umfasst:
mehrere erste rezyklierte Granulatabschnitte (1), worin jeder der ersten rezyklierten Granulatabschnitte (1) eine erste Oberflächenschicht (10) umfasst; und
mehrere zweite rezyklierte Granulatabschnitte (2), worin jeder der zweiten rezyklierten Granulatabschnitte (2) eine zweite Oberflächenschicht (20) aufweist, worin die erste Oberflächenschicht (10) eines der ersten rezyklierten Granulatabschnitte (1) mit der ersten Oberflächenschicht (10) eines anderen der ersten rezyklierten Granulatabschnitte (1) und/oder der zweiten Oberflächenschicht (20) eines der zweiten rezyklierten Granulatabschnitte (2) verschmolzen ist, die zweite Oberflächenschicht (20) eines der zweiten rezyklierten Granulatabschnitte (2) mit der zweiten Oberflächenschicht (20) eines anderen der zweiten rezyklierten Granulatabschnitte (2) und/oder der ersten Oberflächenschicht (10) eines der ersten rezyklierten Granulatabschnitte (1) verschmolzen ist;
worin ein Material der mehreren ersten rezyklierten Granulatabschnitte (1) ein erstes rezyklierbares thermoplastisches Material ist, ein Material der mehreren zweiten rezyklierten Granulatabschnitte (2) ein zweites rezyklierbares thermoplastisches Material ist, die erste Oberflächenschicht (10) jedes der ersten rezyklierten Granulatabschnitte (1) aus dem ersten rezyklierbaren thermoplastischen Material durch eine Kombination von Verfahrensparametern gebildet wird, und die zweite Oberflächenschicht (20) jedes der zweiten rezyklierten Granulatabschnitte (2) aus dem zweiten rezyklierbaren thermoplastischen Material durch die Verfahrensparameter gebildet wird;
worin die Verfahrensparameter eine höchste Temperatur innerhalb einer Verfahrensvorrichtung (7), eine maximale Luftdruckdifferenz zwischen dem Inneren und dem Äußeren der Verfahrensvorrichtung (7) und eine Betriebsdauer der Verfahrensvorrichtung (7) sind;
ferner umfassend eine obere Fläche (S1), eine untere Fläche (S2), die der oberen Fläche (S1) abgewandt ist, und einen Plattenabschnitt (8, 8'), der auf mindestens einer der oberen Fläche (S1) und der unteren Fläche (S2) angeordnet ist, worin der Plattenabschnitt (8, 8') eine Musterschicht (80) aufweist, die auf einer Seite des Plattenabschnitts (8, 8') angeordnet ist;
worin mindestens eines von dem Material der mehreren ersten rezyklierten Granulatabschnitte (1) und dem Material der mehreren zweiten rezyklierten Granulatabschnitte (2) ein transparentes Material ist; und
worin der Plattenabschnitt (8, 8') einem Betrachter durch die mehreren der ersten rezyklierten Granulatabschnitte (1) und/oder die mehreren der zweiten rezyklierten Granulatabschnitte (2) exponiert ist.

2. Lagenaufbau (1000, 1000', 1000", 2000, 3000) nach Anspruch 1, worin das erste rezyklierbare thermoplastische Material eine erste Schmelztemperatur, eine erste Vicat-Erweichungstemperatur und eine erste Glasübergangstemperatur aufweist, und das zweite rezyklierbare thermoplastische Material eine zweite Schmelztemperatur, eine zweite Vicat-Erweichungstemperatur und eine zweite Glasübergangstemperatur aufweist.

3. Lagenaufbau (1000, 1000', 1000", 2000, 3000) nach Anspruch 1, worin mehrere erste rezyklierte Granulate (1') aus dem ersten rezyklierbaren thermoplastischen Material gebildet sind, die mehreren ersten rezyklierten Granulatabschnitte (1) aus den ersten rezyklierten Granulaten (1') durch die Verfahrensparameter gebildet sind, mehrere zweite rezyklierte Granulate (2') aus dem zweiten rezyklierbaren thermoplastischen Material gebildet sind und die mehreren zweiten rezyklierten Granulatabschnitte (2) aus den zweiten rezyklierten Granulaten (2') durch die Verfahrensparameter gebildet sind.

4. Lagenaufbau (1000, 1000', 1000", 2000, 3000) nach Anspruch 1, worin das erste rezyklierbare thermoplastische Material ein thermoplastisches Polyurethan ist und das zweite rezyklierbare thermoplastische Material ein Ethylenvinylacetat ist.

5. Lagenaufbau (1000, 1000', 1000", 2000, 3000) nach Anspruch 1, worin das zweite rezyklierbare thermoplastische Material ein Heißschmelzkleber ist.

6. Lagenaufbau (2000, 3000) nach einem der Ansprüche 1-5, welcher ferner umfasst:
mehrere dritte rezyklierte Granulatabschnitte (9), worin jeder der dritten rezyklierten Granulatabschnitte (9) eine dritte Oberflächenschicht (90) aufweist, worin die dritte Oberflächenschicht (90) eines der dritten rezyklierten Granulatabschnitte (9) mit mindestens einer der dritten Oberflächenschicht (90) eines anderen der dritten rezyklierten Granulatabschnitte (9), der ersten Oberflächenschicht (10) einer der ersten rezyklierten Granulatabschnitte (1) und der zweiten Oberflächenschicht (20) einer der zweiten rezyklierten Granulatabschnitte (2) verschmolzen ist.

7. Lagenaufbau (1000") nach Anspruch 1, worin sich ein Material des Plattenabschnitts (8') von dem Material der mehreren ersten rezyklierten Granulatabschnitte (1) unterscheidet und das Material des Plattenabschnitts (8') sich von dem Material der mehreren zweiten rezyklierten Granulatabschnitte (2) unterscheidet.

8. Lagenaufbau (1000, 1000', 1000", 2000, 3000) nach einem der Ansprüche 1-7, worin die Größe jedes der ersten rezyklierten Granulatabschnitte (1) im Wesentlichen identisch mit der Größe jedes der zweiten rezyklierten Granulatabschnitte (2) ist.

9. Lagenaufbau (1000, 1000', 1000", 2000, 3000) nach einem der Ansprüche 1-8, worin die mehreren ersten rezyklierten Granulatabschnitte (1) eine erste Farbe und die mehreren zweiten rezyklierten Granulatabschnitte (2) eine zweite Farbe aufweisen.

## Revendications

1. Structure en feuille (1000, 1000', 1000", 2000, 3000), comprenant:
une pluralité de premières portions de granulés recyclés (1), chacune des premières portions de granulés recyclés (1) comprenant une première couche de surface (10); et
une pluralité de secondes portions de granulés recyclés (2), chacune des secondes portions de granulés recyclés (2) comprenant une seconde couche de surface (20), la première couche de surface (10) de l'une des premières portions de granulés recyclés (1) étant reliée par fusion à la première couche de surface (10) d'une autre des premières portions de granulés recyclés (1) et/ou à la seconde couche de surface (20) de l'une des secondes portions de granulés recyclés (2), la deuxième couche de surface (20) de l'une des deuxièmes portions de granulés recyclés (2) étant reliée par fusion à la deuxième couche de surface (20) d'une autre des deuxièmes portions de granulés recyclés (2) et/ou à la première couche de surface (10) de l'une des premières portions de granulés recyclés (1);
dans lequel un matériau de la pluralité de premières portions de granulés recyclés (1) est un premier matériau thermoplastique recyclable, un matériau de la pluralité de secondes portions de granulés recyclés (2) est un second matériau thermoplastique recyclable, la première couche de surface (10) de chacune des premières portions de granulés recyclés (1) est formée par le premier matériau thermoplastique recyclable grâce à une combinaison de paramètres de processus, et la seconde couche de surface (20) de chacune des secondes portions de granulés recyclés (2) est formée par le second matériau thermoplastique recyclable grâce à ces paramètres de processus;
dans lequel les paramètres du processus sont une température maximale à l'intérieur d'un appareil de traitement (7), une différence de pression d'air maximale entre l'intérieur et l'extérieur de l'appareil de traitement (7), et une durée de fonctionnement de l'appareil de traitement (7);
comprenant en outre une surface supérieure (S1), une surface inférieure (S2) opposée à la surface supérieure (S1) et une partie de panneau (8, 8') disposée sur au moins une des surfaces supérieure (S1) et inférieure (S2), la partie de panneau (8, 8') ayant une couche de motif (80) disposée sur un côté de la partie de panneau (8, 8');
dans lequel au moins l'un des matériaux de la pluralité de premières portions de granulés recyclés (1) et le matériau de la pluralité de secondes portions de granulés recyclés (2) est un matériau transparent; et
dans laquelle la partie de panneau (8, 8') est exposée à un spectateur à travers la pluralité de premières portions de granulés recyclés (1) et/ou la pluralité de secondes portions de granulés recyclés (2).

2. Structure en feuille (1000, 1000', 1000", 2000, 3000) de la revendication 1, dans laquelle le premier matériau thermoplastique recyclable a une première température de fusion, une première température de ramollissement Vicat et une première température de transition vitreuse, et le deuxième matériau thermoplastique recyclable a une deuxième température de fusion, une deuxième température de ramollissement Vicat et une deuxième température de transition vitreuse.

3. Structure en feuille (1000, 1000', 1000", 2000, 3000) de la revendication 1, dans laquelle une pluralité de premiers granulés recyclés (1') sont formés par le premier matériau thermoplastique recyclable, la pluralité de premières portions de granulés recyclés (1) sont formées par les premiers granulés recyclés (1') à travers les paramètres du processus, une pluralité de seconds granulés recyclés (2') sont formés par le second matériau thermoplastique recyclable, et la pluralité de secondes portions de granulés recyclés (2) sont formées par les seconds granulés recyclés (2') à travers les paramètres du processus.

4. Structure en feuille (1000, 1000', 1000", 2000, 3000) de la revendication 1, dans laquelle le premier matériau thermoplastique recyclable est un polyuréthane thermoplastique, et le second matériau thermoplastique recyclable est un éthylène-acétate de vinyle.

5. Structure en feuille (1000, 1000', 1000", 2000, 3000) de la revendication 1, dans laquelle le second matériau thermoplastique recyclable est une colle thermofusible.

6. Structure en feuille (2000, 3000) de l'une des revendications 1-5, comprenant en outre:
une pluralité de troisièmes portions de granulés recyclés (9), chacune des troisièmes portions de granulés recyclés (9) comprenant une troisième couche de surface (90), la troisième couche de surface (90) de l'une des troisièmes portions de granulés recyclés (9) étant reliée par fusion à au moins une des troisièmes couches de surface (90) d'une autre des troisièmes portions de granulés recyclés (9), la première couche de surface (10) de l'une des premières portions de granulés recyclés (1) et la deuxième couche de surface (20) de l'une des deuxièmes portions de granulés recyclés (2).

7. Structure en feuille (1000") de la revendication 1, dans laquelle un matériau de la partie de panneau (8') est différent du matériau de la pluralité de premières portions de granulés recyclés (1), et le matériau de la partie de panneau (8') est différent du matériau de la pluralité de secondes portions de granulés recyclés (2).

8. Structure en feuille (1000, 1000', 1000", 2000, 3000) de l'une des revendications 1-7, dans laquelle la taille de chacune des premières portions de granulés recyclés (1) est sensiblement identique à la taille de chacune des secondes portions de granulés recyclés (2).

9. Structure en feuille (1000, 1000', 1000", 2000, 3000) de l'une des revendications 1-8, dans laquelle la pluralité de premières portions de granulés recyclés (1) a une première couleur, et la pluralité de secondes portions de granulés recyclés (2) a une seconde couleur.
